# FASCICULE DE BREVET EUROPEEN

(11) **EP 0 390 934 B1**
(45) Date de publication et mention de la délivrance du brevet: **07.09.1994**
(21) Numéro de dépôt: 87117874.5
(22) Date de dépôt: 13.06.1984
(51) Int. Cl.: G01F 15/16, G01F 3/22

(54) **Compteur à gaz**
Gaszähler
Gas meter

(30) Priorité: 14.06.1983 FR 8309791
(43) Date de publication de la demande: 10.10.1990
(62) Demande divisionnaire de: 84401196.5
(73) Titulaire: SCHLUMBERGER INDUSTRIES, F-92120 Montrouge (FR)
(72) Inventeur: Carte, Michel, F-51100 Reims (FR); Benadassi, Michel, F-02190 Guignicourt (FR); Dumay, Michel, F-51140 Jonchery sur Vesle (FR)
(74) Mandataire: Dupont, Henri

(56) Documents cités:
- DE-A- 2 756 163
- FR-A- 1 466 742
- GB-A- 857 663
- GB-A- 1 241 796

## Description

La présente invention concerne un compteur à gaz.

De façon plus précise l'invention concerne un compteur à gaz du type à soufflets.

Ces compteurs sont bien connus et le brevet britannique 1 508 307 en décrit un exemple de réalisation. Il consiste essentiellement en deux espaces de mesure, chaque espace étant séparé en deux chambres de mesure par un soufflet déformable. Chaque chambre de mesure comporte un orifice pour l'admission puis l'évacuation du volume de gaz à mesurer.

Pour synchroniser l'admission et l'évacuation du gaz dans les chambres avec la position des soufflets chaque soufflet est associé à un système de transmission qui commande un distributeur venant mettre cycliquement les orifices associés aux chambres en communication avec l'arrivée de gaz dans le compteur ou avec la sortie de gaz.

Le distributeur peut être du type à déplacement linéaire, c'est le cas du compteur décrit dans le brevet britannique déjà cité, ou à déplacement rotatif. Dans ce deuxième cas les orifices associés aux chambres sont disposés sur une couronne circulaire et le distributeur tourne autour de l'axe de cette couronne.

Dans les compteurs à gaz à quatre chambres, par exemple celui qui est décrit dans le brevet britannique 1.508.307, la caisse du compteur est constituée par un bloc central présentant une âme centrale et par deux couvercles latéraux. La périphérie de chacun des deux soufflets est pincée entre un bord du bloc central et le bord d'un des couvercles latéraux. En outre, si le bloc central comporte les éléments de structure pour définir les passages internes associés aux deux chambres internes (celles qui sont définies par le bloc central), une partie des éléments de structure définissant les passages internes associés aux deux chambres externes (celles qui sont définies par les deux couvercles latéraux) fait partie intégrante des deux couvercles latéraux.

Les documents FR-A-1466742 et DE-A-2756163 décrivent également une telle structure.

Une telle disposition de la caisse du compteur est d'un montage délicat qui ne permet pas un assemblage à l'aide de moyens automatiques.

Pour remédier à ces inconvénients, un objet de l'invention est de fournir un compteur à gaz à quatre chambres dont la caisse présente une structure telle qu'elle permette un assemblage facile et en particulier par des moyens automatiques lorsque ladite caisse est réalisée avec des matériaux plastiques thermo-soudables.

Pour atteindre ce but, le compteur à gaz comprenant une unité de mesure comportant une caisse formant deux compartiments de mesure, chaque compartiment étant séparé par un soufflet déformable en deux chambres et une surface de distribution dans laquelle sont ménagés quatre orifices, chaque orifice étant relié à une desdites chambres par des passages internes, un distributeur monté mobile sur ladite surface de distribution, et des moyens de transmission pour relier cinématiquement ledit distributeur auxdits soufflets, lesdits moyens de transmission comprenant au moins deux ensembles de leviers, se caractérise en ce que ladite caisse est formée par un bloc central et par deux couvercles latéraux solidaires dudit bloc central, ledit bloc central comportant tous les éléments de structure définissant lesdits passages internes.

D'autres caractéristiques et avantages de l'invention apparaîtront plus clairement à la lecture de la description qui suit d'un mode de réalisation de l'invention donné à titre d'exemple non limitatif. La description se réfère aux dessins annexés sur lesquels :

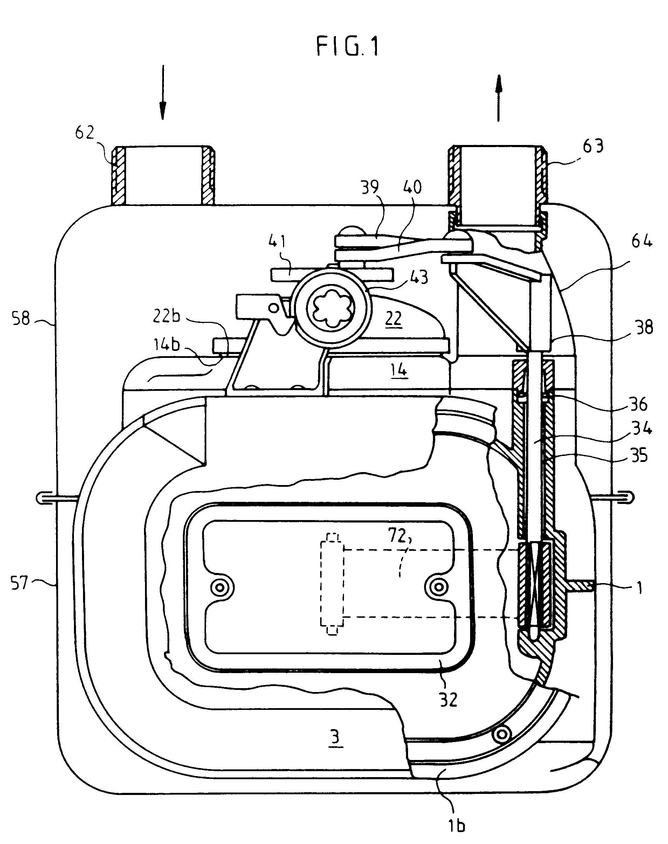

La figure 1 est une vue en coupe verticale partielle du compteur selon l'invention ;
La figure 2 est une vue de dessus du compteur, la partie supérieure de l'enveloppe externe étant enlevée ;
La figure 3a est une vue en coupe verticale selon la ligne brisée A-A de la figure 2;
La figure 3b est une vue de détail de la figure 3a, montrant plus particulièrement le montage et l'entraînement du distributeur;
La figure 4 est une vue en coupe partielle verticale selon un plan parallèle à celui de la figure 1 ;
La figure 5, analogue à la figure 4, montre une variante de réalisation de l'introduction et de l'évacuation du gaz dans et hors de l'enveloppe du compteur.
La figure 6a est une vue du bloc central de la caisse du compteur en coupe selon la ligne VI-VI de la figure 2;
La figure 6b est une vue du bloc central en coupe selon la ligne B-B de la figure 6a;
La figure 6c est une vue du bloc central en coupe selon la ligne C-C de la figure 6a;
La figure 6d est une vue du bloc central en coupe selon la ligne D-D de la figure 6a;
La figure 6e est une vue de dessus du bloc central de la caisse du compteur; et
La figure 7 est une vue explosée en perspective illustrant un mode d'assemblage des soufflets et des couvercles latéraux sur le bloc central.

Comme cela est bien connu, le compteur se compose essentiellement d'une enveloppe externe étanche A, d'une unité de mesure B disposée à l'intérieur de l'enveloppe A et d'un totalisateur C qui permet d'afficher de façon mécanique la mesure de volume effectuée par l'unité de mesure B.

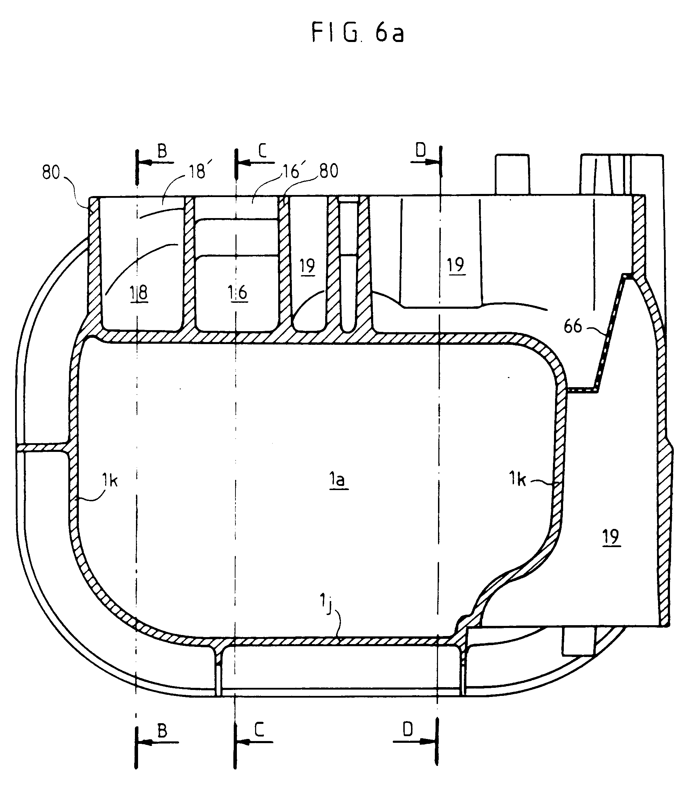

L'unité de mesure B comprend tout d'abord une caisse D qui comporte un bloc central référencé 1 et deux couvercles latéraux respectivement référencés 2 et 3. Comme le montre plus particulièrement les figures 6a à 6d, le bloc central, 1 comprend une cloison centrale 1a disposée selon le plan principal longitudinal du bloc central par un fond 1j sensiblement perpendiculaire à la cloison centrale 1a, et deux parois latérales référencées 1k. La partie supérieure du bloc central, qui est plus complexe sera décrite ultérieurement. Les couvercles 2 et 3 sont soudés par des surfaces d'accouplement formant le bord du fond 1j, des parois latérales 1k et de la partie supérieure du bloc central 1. Par exemple, on trouve les surfaces d'accouplement 1c et 1d qui sont soudées avec des surfaces d'accouplement 2a et 3a des couvercles 2 et 3. Cet ensemble constitué par le bloc central et les couvercles latéraux définit deux espaces séparés par la cloison centrale 1a et respectivement référencés 4 et 5. Ces espaces seront appelés ultérieurement compartiments. Comme cela est bien connu chaque compartiment 4 et 5 est séparé en deux chambres par un soufflet déformable ou diaphragme. Pour le compartiment 4 on trouve le soufflet 10 et pour le compartiment 5 le soufflet 11. Ainsi le compartiment 4 est séparé par le soufflet 10 en une chambre 6 et une chambre 7. Symétriquement le soufflet 11 sépare le compartiment 5 en une chambre 8 et une chambre 9. La périphérie de chaque soufflet est pincée entre des épaulements internes ménagés dans la fond 1j, les parois latérales 1k;et la partie supérieure du bloc central 1, respectivement référencés 1e et 1f et des brides respectivement référencées 12 et 13. La caisse D comprend enfin à sa partie supérieure un couvercle de distribution 14 qui est soudé ou collé à la partie supérieure du bloc central 1 qui sera décrite ultérieurement.

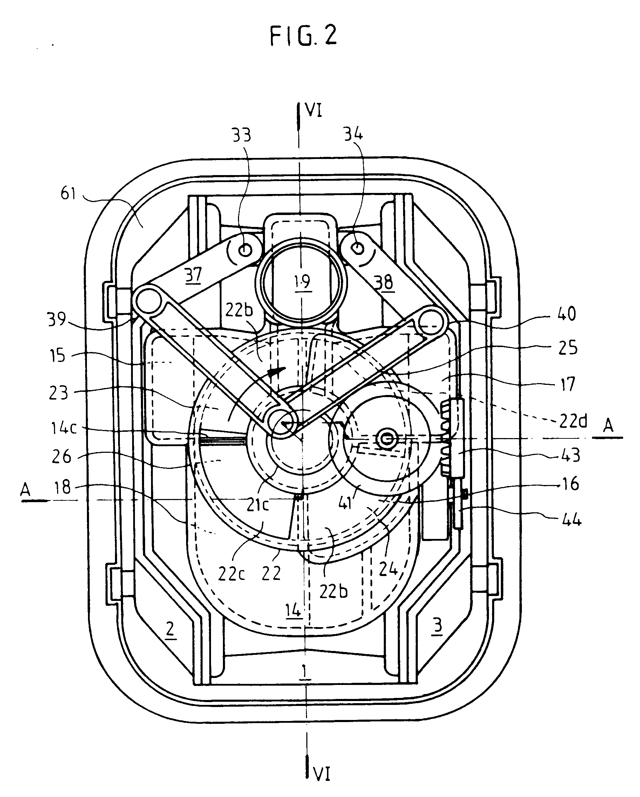

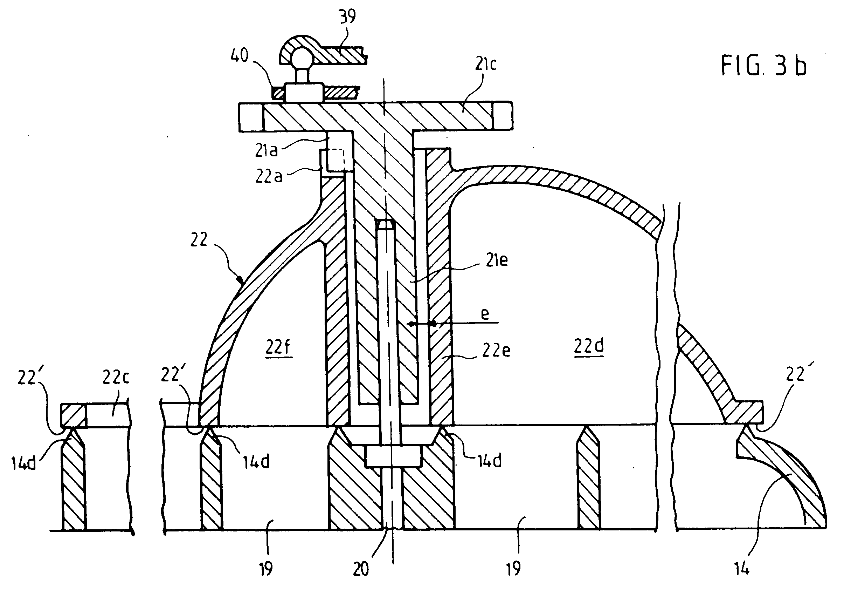

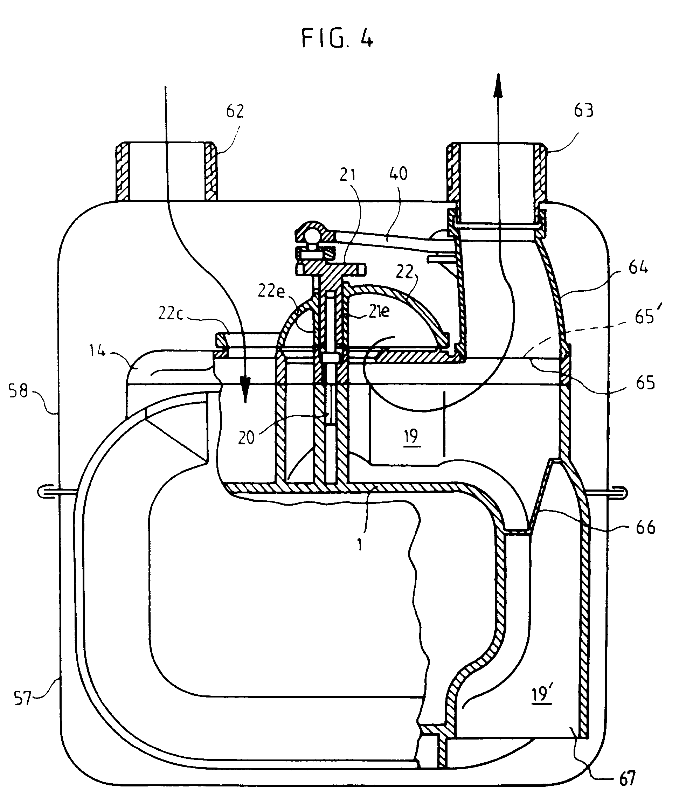

Le couvercle de distribution 14 et la partie supérieure du bloc central 1 définissent en outre des passages internes respectivement référencés 15, 16, 17 et 18. Ces pièces définissent de plus un passage central de sortie 19 mieux visible sur les figures 3b et 4. Comme on le voit sur la figure 2, la face supérieure 14b du couvercle de distribution 14 comporte quatre ouvertures ou lumières ayant chacune la forme d'un quart de secteur de cercle qui sont respectivement référencées 23, 24, 25 et 26 séparées par des barrettes radiales d'étanchéité 14c. La face supérieure 14b forme un siège ou glace dans lequel sont ménagées les 4 lumières déjà définies. Les passages internes 15 à 18 ont pour but de relier chaque chambre 6 à 9 avec une des lumières 23 à 26. Plus précisément, les chambres 6, 7, 8 et 9 sont mises en communication avec les lumières 23, 24, 25 et 26, respectivement par les passages internes 15, 16, 17 et 18.

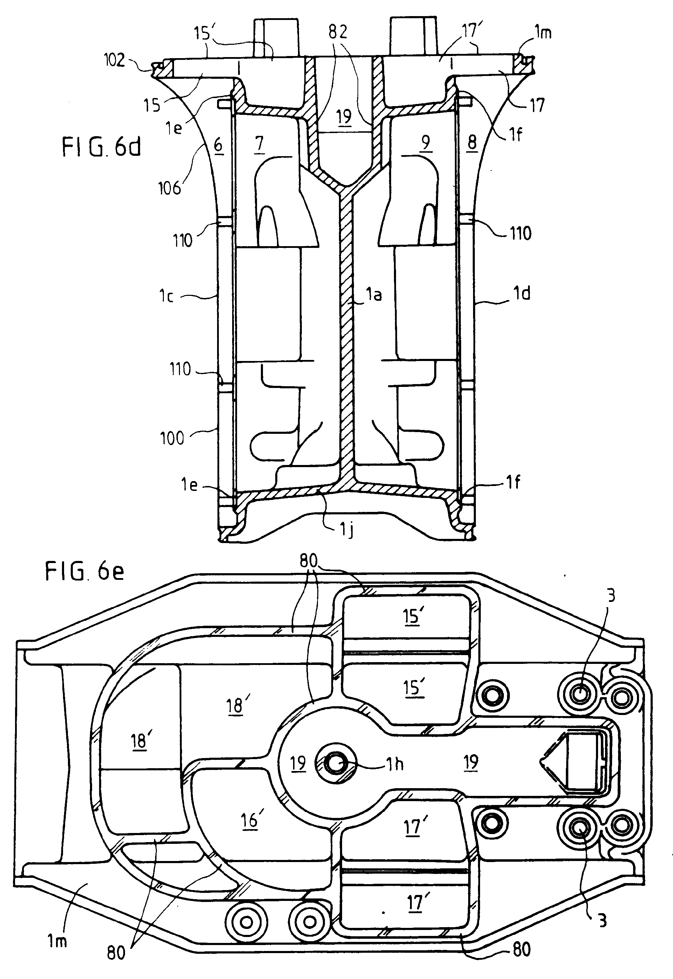

En se référant plus particulièrement aux figures 6a à 6e on comprendra mieux comment sont définis les passages 15 à 18. La figure 6e montre que la partie supérieure du bloc central 1 comprend une paroi supérieure 1m dans laquelle débouchent des orifices séparés par des éléments de cloison parallèles à la cloison centrale 1a et qui portent la référence générale 80. C'est sur l'extrémité supérieure libre des éléments de cloison 80 qu'est fixé le couvercle de distribution 14. Les orifices forment l'extrémité des passages 15 à 19. Sur la figure 6e on a repéré ces orifices par la référence du passage dont ils forment l'extrémité, mais affectée du signe prime. Le couvercle de distribution 14 a pour fonction de relier de façon étanche les orifices 15′ à 18′ aux lumières 23 à 26.

La figure 6d montre que le passage interne 17 se réduit à un trou, également référencé 17, percé dans la paroi supérieure 1m du bloc central qui fait directement communiquer la chambre 8 avec l'orifice 17′ et que le passage interne 15 se réduit à un trou, également référencé 15, percé dans la paroi supérieure 1m du bloc central et qui fait directement communiquer le chambre 6 avec l'orifice 15′. Le passage central 19 est limité par une cloison en forme de U référencée 82 et dont le sommet est raccordé à la périphérie supérieure de la cloison centrale du moins sur une partie de la longueur de celle-ci, comme le montre la figure 6a.

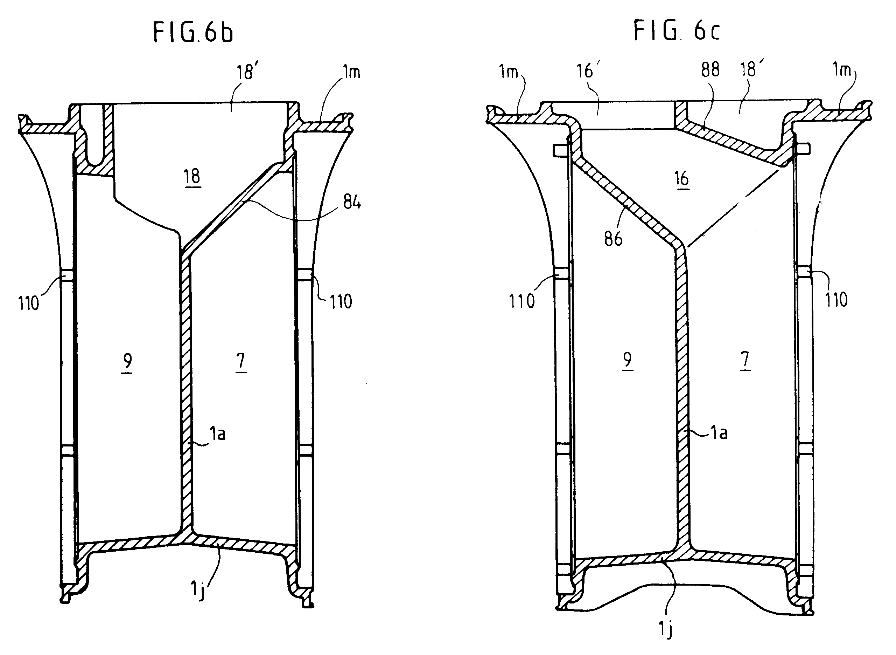

La figure 6b montre que le passage 18 qui fait communiquer la chambre 9 avec l'orifice 18′ de la figure 6e est limité par une cloison inclinée 84 raccordée aux éléments de cloison de la figure 6e entourant l'orifice 18′.

La figure 6c montre que le passage interne 16 qui relie la chambre 7 à l'orifice 16′ de la figure 6e est limité par une première cloison inclinée 86 qui s'étend de la périphérie de la cloison centrale 1a à un des éléments de cloison entourant l'orifice 16′, par une dexième cloison inclinée 88 séparant le passage 16 d'une partie de l'orifice 18′ et par les éléments de cloison de la figure 6e entourant l'orifice 16′.

La description précédente faite en liaison avec les figures 6a à 6e montre que, selon une caractéristique importante de l'invention, la totalité des passages internes 15 à 18, ainsi que le passage central 19 sont définis par des éléments de structure appartenant au bloc central 1. Le couvercle de distribution 14 a simplement pour fonction de relier les orifices 15′ à 18′ du bloc central aux lumières de distribution 23 à 26. Ainsi les couvercles latéraux 2 et 3 ne comportent aucun élément de définition des passages internes.

L'unité de mesure comprend également un distributeur rotatif portant la référence générale 22. La face inférieure 22′ du distributeur 22 glisse sur le siège ou glace formé par la face supérieure 14b du couvercle de distribution 14. Plus précisément la face 14b est munie de barrettes ou nervures 14d, mieux visibles sur la figure 3b, qui coopèrent avec la face inférieure 22′ du distributeur pour assurer les étanchéités nécessaires.Le distributeur est constitué par quatre secteurs de cercle qui consistent respectivement en un orifice 22c et en une zone bombée 22d séparés par deux zones planes 22b. Chacune de ces quatre zones correspond à un angle de 90°. Le distributeur comporte également une zone centrale évidée 22f qui communique avec la zone bombée creuse 22d. On comprend aisément que l'orifice 22c a pour but de mettre successivement chaque lumière en communication avec l'extérieur de l'unité centrale limité par l'enveloppe A ,que la zone bombée 22nd et la zone centrale 22f ont pour but de mettre en communication le passage central 19 avec une des lumières tout en isolant l'ensemble vis-à- vis de l'extérieur de l'unité de mesure et que les zones planes 22b obturent successivement les lumières.

Comme cela est bien connu, la rotation du distributeur permet de commander l'admission et l'évacuation du gaz dans les différentes chambres de mesure.

Les compteurs à quatre chambres et à distributeur rotatif sont bien connus en eux-mêmes, par exemple par le brevet américain N° 3 161 049. Il est donc inutile de décrire ici les détails de fonctionnement d'un tel compteur, c'est-a-dire les relations entre la position du distributeur rotatif et la position des soufflets dans les compartiments de mesure. Il suffira de se reporter au document cité ci-dessus.

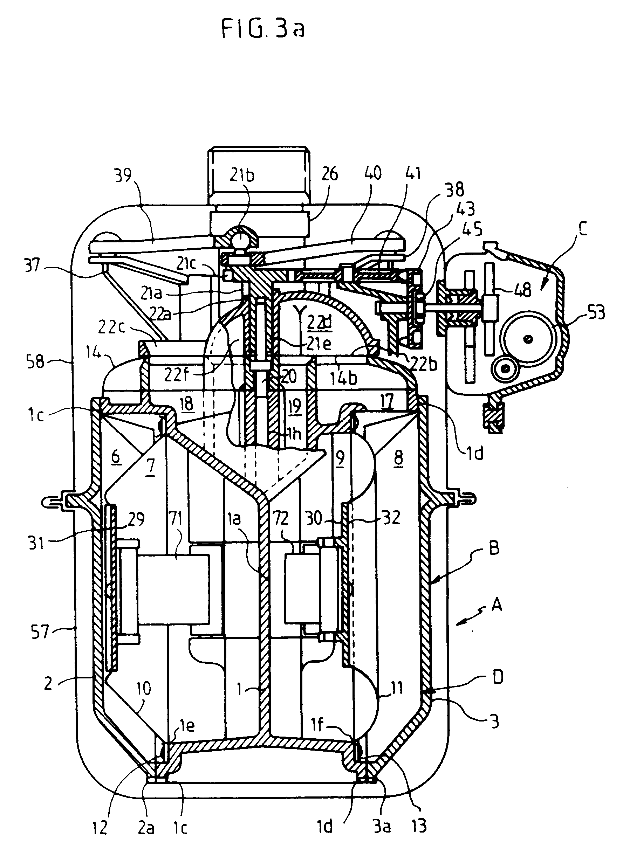

En se référant à la figure 3a on voit que l'enveloppe externe A est constituée par deux coquilles 57 et 58 respectivement inférieure et supérieure. La coquille supérieure 58 est munie d'une buse d'admission du gaz 62 et d'une buse d'évacuation du gaz 63. La buse d'évacuation 63 est reliée par le conduit 64 au passage interne d'évacuation 19 par l'intermédiaire de l'orifice 65 ménagé dans une zone perforable 65′ du couvercle de distribution 14 située à l'extérieur de la surface balayée par le distributeur 22.

Enfin, le totalisateur C visible sur la figure 2a. comprend des tambours 53 d'affichage de la mesure. Ces tambours sont reliés cinématiquement à la roue 21c de la manivelle 21 par un ensemble de roues dentées référencées 41,43, 45, et 48 qu'il n'est pas nécessaire de décrire plus en détail.

En variante. Il est possible de prévoir entre le fourreau 22e et le moyeu 21e un jeu e non négligeable, par exemple de l'ordre de 1 mm. Sous l'effet de la rotation de la manivelle 21, le distributeur 22 est entraîné en rotation autour d'un axe variable aléatoirement du fait du jeu e qui n'est plus négligeble. Le mouvement du distributeur est donc excentré par rapport à l'axe de rotation du moyeu 21e.

En conséquence, la surface de contact entre les barrettes 14d du couvercle de distribution et la face inférieure 22′ du distributeur 22 varie en même temps que l'axe de rotation du distributeur. Il en résulte que l'usure de la face inférieure 22′ du distributeur 22 intéresse une beaucoup plus grande portion de celle-ci, portion qui est définie par le jeu e. Ainsi l'usure de la face 22′ du distributeur 22 est beaucoup plus régulière.

Il est important de revenir plus en détail sur le mode particulier d'entraînement en rotation du distributeur 22.

Outre l'entraînement en rotation du distributeur, les ensembles de leviers 37-39 et 38-40 risquent d'appliquer au distributeur un couple de basculement, comme cela a déjà été expliqué. Selon l'invention ce couple de basculement est appliqué à l'ensemble formant manivelle 21. Du fait qu'il existe un certain jeu entre le moyeu 21e de la manivelle et le fourreau 22e du distributeur, et que la seule liaison entre la manivelle 21 et le distributeur 22 est réalisée par la coopération debasculement est appliqué à la manivelle, mais n'est pas transmis au distributeur lui-même. Il en résulte que l'usure de la face du distributeur en contact avec la glace 14b est régulière.

Dans le mode de réalisation décrit et représenté en particulier sur la figure 4, le gaz entre et sort du compteur à la partie supérieure de l'enveloppe A. Selon une caractéristique de l'invention, le compteur est réalisé de telle manière que, moyennant des opérations simples d'usinage et de montage, l'introduction du gaz dans l'enveloppe se fasse toujours à la partie supérieure de l'enveoppe, mais que l'évacuation du gaz se fasse à la partie inférieure de l'enveloppe, sensiblement dans le prolongement de l'introduction. Pour cela, le bloc central 1 et les couvercles latéraux 2 et 3 définissent un passage interne 19′ séparé, sur la figure 4, du passage 19 par une cloison mince 66 perforable. Le passage 19′ débouche par l'orifice 67 à l'extrémité inférieure de la caisse D.

Pour réaliser le système d'introduction-évacuation de la figure 4 on voit qu'il suffit de percer l'orifice 65 dans la zone 65′ du couvercle de distribution 14., de prévoir les buses d'admission 62 et d'évacuation 63 comme cela est représenté sur la figure 4 et de monter le conduit 64.

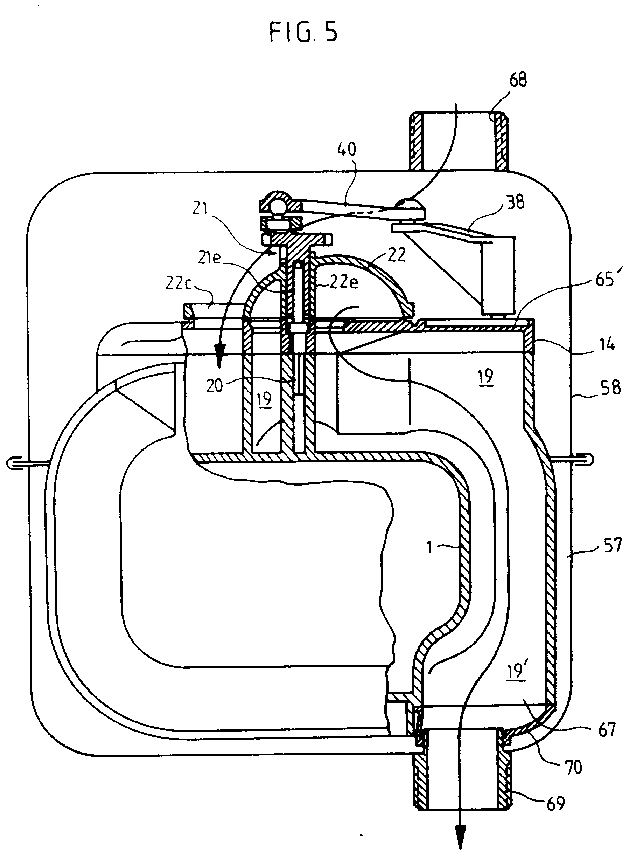

Pour réaliser le système d'introduction-évacuation de la figure 5, on ne perce pas d'orifice dans le couvercle de distribution 14, mais on supprime la cloison mince 66 pour faire communiquer les passages internes 19 et 19′. En outre, on monte sur l'enveloppe A la buse d'admission 68 qui joue le même rôle que la buse 62 de la figure 4 et la buse d'évacuation 69 disposée à la partie inférieure de l'enveloppe A. Enfin on relie par la conduite 70 la buse d'évacuation 69 et l'orifice 67.

Il ressort de la description précédente qu'en fabriquant un seul type de caisse, il est possible de fournir des compteurs avec les deux systèmes d'admission-évacuation moyennant un nombre très limité d'usinages particuliers. Pour le montage de la figure 4 il suffit de percer l'orifice 65 dans la zone 65′ du couvercle d'admission 14. Pour le montage de la figure 5 il suffit de supprimer la cloison mince 66 qui est facilement accessible.

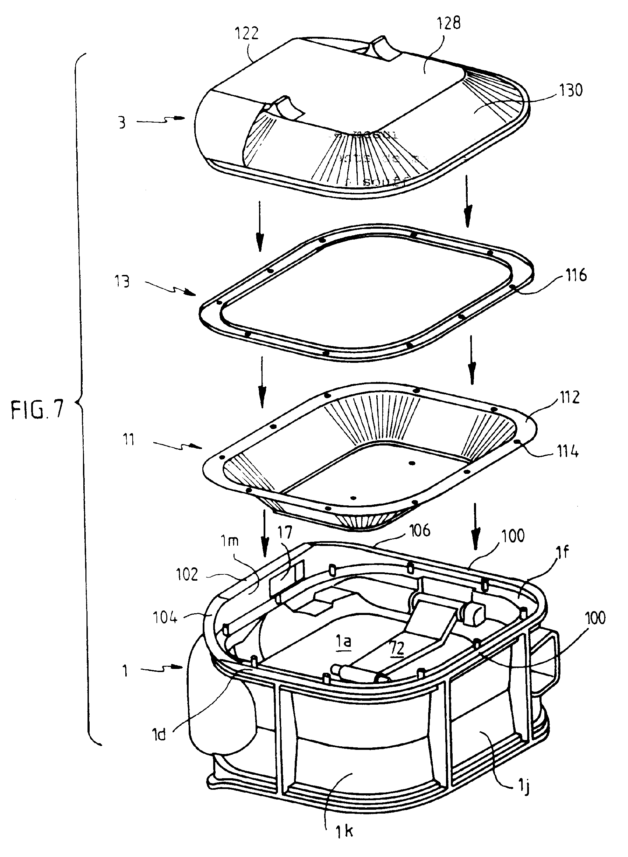

En se référant plus particulièrement aux figures 6d et 7 on va décrire plus en détail un mode préféré de montage des soufflets et des couvercles latéraux sur le bloc central 1, dans le cas où la caisse du compteur est réalisée en un matériau plastique.

La figure 6d montre que la paroi latérale 1k, 1j, 1m du bloc central 1 qui est raccordée à la cloison la, comporte deux surfaces d'accouplement 1c et 1d pour la fixation des couvercles latéraux 2 et 3. Ces surfaces d'accouplement 1c et 1d ne sont pas entièrement planes. Chaque surface comporte une portion plane 100 correspondant au fond de la caisse 1j et à la plus grande partie des faces latérales de la caisse 1k disposée dans un plan parallèle à celui de la cloison 1a, une autre portion 102 également plane mais disposée dans un plan différent de celui de la portion 100 et parallèle à celui-ci et correspondant à la face supérieure 1m sur laquelle est fixé le couvercle de distribution 14, ces deux portions planes 100 et 102 étant raccordées par deux portions incurvées 104 et 106.

Les portions incurvées 104 et 106 sont engendrées par une portion de droite qui se déplace en restant parallèle à la cloison centrale 1a et perpendiculaire à la face supérieure 1m du bloc central. Comme cela a déjà été indiqué, le bloc central définit également deux épaulements respectivement référencés 1e et 1f. Ces épaulements sont plans et disposés symétriquement par rapport à la cloison centrale 1a dans des plans parallèles à celle-ci. Le plan de chaque épaulement est interne par rapport au plan dans lequel se trouve la première portion plane 100 de la surface de raccordement correspondante. Chaque épaulement 1e, 1f comporte des tétons tels que 110 venus de moulage avec le reste du bloc central 1. Le plan de l'épaulement 1f est disposé entre le passage 17 associé à la chambre 8 et l'origine du passage 18 associé à la chambre 9. On trouve une disposition semblable pour l'épaulement 1e.

La figure 7 illustre les différentes phases de la mise en place des soufflets et des couvercles latéraux. Tout d'abord l'extrémité du bras 72 est montée à pivotement sur la plaque 30 solidaire du soufflet 11. Puis on place la périphérie 112 plane du soufflet sur l'épaulement 1f de telle manière que les tétons 110 pénètrent dans des trous 114 ménagés dans la périphérie 112 du soufflet. On met ensuite en place la bride 13 qui est munie d'orifices correspondants 116. La bride 13 est appliquée avec pression sur la périphérie du soufflet et on déforme par ultra-sons les têtes des tétons 110 pour réaliser ainsi une fixation étanche de la périphérie 112 du soufflet sur l'épaulement 1f.

La partie supérieure de la figure 7 montre que le couvercle latéral 3 présente une surface d'accouplement 3a qui est conjuguée de la surface d'accouplement 1d du bloc central 1. Plus précisément, la surface d'accouplement comporte une portion plan 120 correspondant à la portion 100 de la surface d'accouplement 1d, une deuxième portion plan 122 correspondant à la portion 102 et deux portions incurvées 124 et 126 correspondant aux portions 104 et 106 de la surface 1d.

Ainsi que le montre la figure 7 le couvercle latéral 3 comporte une partie plane 128 qui prolonge la portion 122 de la surface d'accouplement et une partie inclinée 130 qui raccorde la partie plane 128 à la partie 120 de la surface d'accouplement 3a, cette partie inclinée 130 étant en outre limitée par les portions incurvées 124 et 126 de la surface d'accouplement 3a.

Le couvercle latéral 3 est fixé sur le bloc central 1 par un soudage par friction. Pour cela le couvercle 3 est posé sur le bloc central 1 de telle manière que la surface d'accouplement 3a du couvercle soit au contact de la surface d'accouplement 1d du bloc central. Puis, tout en appliquant une force suffisante sur la partie 128 du couvercle 3 on soumet l'ensemble : bloc central 1, couvercle latéral 3 à un mouvement relatif de vibration selon la direction F qui est perpendiculaire à la partie supérieure 1m du bloc central. Cela est possible du fait de la définition donnée précédemment des deux surfaces d'accouplement. La combinaison de la force appliquée et du mouvement de vibration relatif provoque un échauffement localisé des surfaces d'accouplement et donc un soudage. Bien entendu, le couvercle 3 est réalisé en un matériau thermo-plastique identique à, ou compatible avec, celui dont est fait le bloc central. On obtient ainsi une solidarisation étanche entre le bloc central 1 et le couvercle latéral 3.

On procède d'une façon similaire pour le montage du soufflet 10 et du couvercle latéral 2 respectivement sur l'épaulement 1e et sur la surface d'accouplement 1c.

De préférence le matériau thermo-soudable est un polyester butylène térephtalate chargé en fibres de verre. La pression exercée perpendiculairement aux couvercles est de l'ordre de 700 daN. Les vibrations appliquées aux couvercles parallèlement aux surfaces d'accouplement ont une fréquence de l'ordre de 200 Hz et une amplitude de 0,7 à 1,5 mm.

Un tel mode de réalisation de la caisse du compteur présente de nombreux avantages par rapport aux techniques habituellement utilisées. Il faut ajouter que ce mode de réalisation de la caisse pourrait tout aussi bien s'appliquer au cas d'un compteur à quatre chambres ayant un distributeur à déplacement linéaire ou oscillant.

Du fait que la totalité des passages internes 15 à 18 reliant les chambres au couvercle de distribution 14 ainsi que le passage central 19 soient réalisés dans le bloc central 1 simplifie les problèmes d'étanchéité entre le bloc central et les couvercles latéraux. En effet, dans les constructions où les couvercles latéraux servent à définir une partie des passages internes, ceux qui sont associés aux deux chambres externes, il faut prévoir des joints d'étanchéité particuliers pour ces passages internes.

De plus, la séparation entre la fixation des soufflets et la fixation des couvercles latéraux sur le bloc central permet de simplifier sensiblement l'assemblage du compteur et d'en permettre l'automatisation, par rapport aux techniques connues selon lesquelles la périphérie du soufflet est pincée entre un bord u bloc central et le bord d'un des couvercles latéraux. Dans ces techniques connues, il est nécessaire que le soufflet présente une surépaisseur à sa périphérie pour assurer la double étanchéité entre le soufflet le bloc central et le couvercle latéral. Au contraire, selon l'invention, du fait que l'étanchéité doit être réalisée directement entre le bloc central et les couvercles latéraux, il est possible d'utiliser un soudage par friction ce qui serait impossible si un joint d'étanchéité devait être interposé entre ces deux pièces.

Enfin, la forme même des couvercles latéraux présente deux avantages par rapport à une solution dans laquelle des couvercles seraient plats. D'une part la présence de la portion inclinée 130 permet de rigidifier le couvercle, d'autre part cette même portion inclinée permet de diminuer l'encombrement total du compteur, notamment en autorisant l'utilisation d'une coquille inférieure 57 qui présente des congés sans en augmenter les dimensions.

## Revendications

1. Compteur à gaz comprenant une unité de mesure, comportant une caisse (D) formant deux compartiments de mesure, chaque compartiment étant séparé par un soufflet déformable en deux chambres et une surface de distribution (14b) dans laquelle sont ménagés quatre orifices (23 à 26), chaque orifice étant relié à une desdites chambres par des passages internes (15 à 18), un distributeur (22) monté mobile sur ladite surface de distribution, et des moyens de transmission pour relier cinématiquement ledit distributeur auxdits soufflets, lesdits moyens de transmission comprenant au moins deux ensembles de leviers (37-39 et 38-40), ladite caisse (D) étant formée par un bloc central (1) et par deux couvercles latéraux (2, 3) solidaires dudit bloc central, caractérisé en ce que le bloc central (1) comporte tous les éléments de structure définissant lesdits passages internes (15 à 18), lesdits couvercles latéraux (2, 3) ne servant en aucune façon à définir une partie de ces passages internes (15 à 18).

2. Compteur selon la revendication 1, caractérisé en ce que ledit bloc central (1) comprend deux épaulements (1e, 1f) disposés dans des plans parallèles entre eux, et deux surfaces d'accouplement (1c, 1d), en ce que la périphérie (112) de chacun desdits soufflets (10,11) est fixée de façon étanche sur chacun desdits épaulements (1e, 1f), et en ce que chaque couvercle latéral (2, 3) comporte un rebord muni d'une surface d'accouplement (2a, 3a), les couvercles latéraux (2, 3) étant directement fixés audit bloc central (1) par les surfaces d'accouplement (2a, 3a, 1c, 1d).

3. Compteur selon la revendication 2, caractérisé en ce que ledit bloc central (1) et lesdits couvercles latéraux (2, 3) sont réalisés en un matériau thermo-soudable et sont solidarisés entre eux par soudage par friction.

## Patentansprüche

1. Gaszähler mit einer Meßeinheit, die ein Gehäuse (D) aufweist, das zwei Maßabteile bildet, wobei jedes Abteil durch einen verformbaren Balgen in zwei Kammern unterteilt ist, sowie eine Verteilerfläche (14b), in der vier Öffnungen (23 bis 26) vorgesehen sind, wobei jede Öffnung durch innere Durchgänge (15 bis 18) mit einer der Kammern verbunden ist, wobei ein Verteiler (22) beweglich auf der Verteilerfläche gelagert ist, sowie Übertragungsmittel zur kinematischen Verbindung des Verteilers mit den Balgen, wobei die Übertragungsmittel wenigstens zwei Sätze von Hebeln (37-39 und 38-40) aufweisen, und wobei das Gehäuse (D) durch einen zentralen Block (1) und zwei mit dem zentralen Block fest verbundene, seitliche Deckel (2, 3) gebildet ist, dadurch gekennzeichnet, daß der zentrale Block (1) alle Strukturelemente aufweist, die die inneren Durchgänge (15 bis 18) bilden, wobei die seitlichen Deckel (2, 3) in keiner Weise zur Bildung eines Teils dieser inneren Durchgänge (15 bis 18) dienen.

2. Zähler nach Anspruch 1, dadurch gekennzeichnet, daß der zentrale Block (1) zwei in zueinander parallelen Ebenen angeordnete Schultern (1e, 1f) sowie zwei Kopplungsflächen (1c, 1d) aufweist, daß der Umfang (112) jedes der Balgen (10, 11) dicht an jeder der Schultern (1e, 1f) befestigt ist, und daß jeder seitliche Deckel (2, 3) einen mit einer Kopplungsfläche (2a, 3a) versehenen Rand aufweist, wobei die seitlichen Deckel (2, 3) durch die Kopplungsflächen (2a, 3a, 1c, 1d) direkt an dem zentralen Block (1) befestigt sind.

3. Zähler nach Anspruch 2, dadurch gekennzeichnet, daß der zentrale Block (1) und die seitlichen Deckel (2, 3) aus einem heißsiegelfähigen Material hergestellt und miteinander durch Reibungsverschweißung fest verbunden sind.

## Claims

1. Gas meter with a measurement unit including a case (D) forming two measurement compartments, each compartment being separated by a bellow deformable into two chambers and a distribution surface (14b) in which are provided four orifices (23 to 26), each orifice being connected to one of said chambers by internal passages (15 to 18), a distributor (22) mounted rotatably on said distribution surface, and transmission means for kinematically connecting said distributor to said bellows, said transmission means comprising at least two lever assemblies (37-39 and 38-40), said case (D) is made up of a central block (1) and two side covers (2, 3) fixed to said central block, characterized in that the central block (1) embodies all the structural elements defining said internal passages (15 to 18), said side covers (2,3) are not used, by any means, to define any portion of the internal passages (15 to 18).

2. The meter according to claim 1, characterized in that said central block (1) comprises 2 shoulders (1e, 1f) placed in parallel planes, and two coupling surfaces (1c, 1d), in that the periphery (122) of each of said bellows (10, 11) is fixed in a sealed manner on each of said shoulder (1e, 1f) and each side cover (2, 3) has an edge equipped with a coupling surface (2a, 3a), the side covers (2, 3) being fixed directly to said central block (1) through the coupling surfaces (2a, 3a, 1c, 1d).

3. The meter according to claim 2, characterized in that said central block (1) and said side covers (2, 3) are made up of a heat-sealable material and are assembled together by friction welding.
